# EUROPEAN PATENT SPECIFICATION

(11) **EP 4 424 578 B1**
(45) Date of publication and mention of the grant of the patent: **21.01.2026**
(21) Application number: 24154097.0
(22) Date of filing: 26.01.2024
(51) Int. Cl.: B62K 11/04, B62K 19/38, F16B 5/02, F16B 39/04

(54) **STRADDLED VEHICLE**
GRÄTSCHSITZFAHRZEUG
VÉHICULE À SELLE

(30) Priority: 28.02.2023 JP 2023030088
(43) Date of publication of application: 04.09.2024
(73) Proprietor: Yamaha Hatsudoki Kabushiki Kaisha, Iwata-shi, Shizuoka-ken 438-8501 (JP)
(72) Inventor: YAGI, Hiroki, Iwata-shi, 438-8501 (JP); TOMONAGA, Takao, Iwata-shi, 438-8501 (JP); UDA, Natsuki, Iwata-shi, 438-8501 (JP); WASHIYAMA, Tsukasa, Iwata-shi, 438-8501 (JP)
(74) Representative: Studio Torta S.p.A.

(56) References cited:
- EP-B1- 2 127 931
- JP-B2- 5 371 629

## Description

### Technical field

The present invention relates to a straddled vehicle.

### Prior art

With straddled vehicles such as motorcycles, vibration of the engine, for example, may be transmitted to vehicle parts, causing the vehicle parts to vibrate. When vehicle parts vibrate, abnormal noise may be generated. In particular, if there is play (in other words, a gap) between two vehicle parts, one of the vehicle parts is more likely to vibrate and generate abnormal noise. Therefore, it has been known to add an elastic member such as a rubber to suppress the vibration of the vehicle parts.

For example, JP 2011-42251 A discloses a motorcycle in which a swing arm and a torque rod are fastened together by passing a bolt through the swing arm, the torque rod and a ring-shaped elastic member made of a rubber or the like and tightening a nut to the bolt. This is expected to reduce vibration of the portion of the torque rod that is in contact with the elastic member, in other words, the portion fastened to the bolt.

Patent Document No. 1: JP 2011-42251 A

Now, vibration may become larger for a portion of a vehicle part fastened to a bolt that is away from the portion fastened to the bolt. Hereinafter, the portion fastened to the bolt is referred to as the fastened portion, and the portion that is away from the portion fastened to the bolt is referred to as the non-fastened portion. The elastic member disclosed in JP 2011-42251 A is attached to the bolt and may not be able to effectively suppress vibration of the non-fastened portion.

In order to effectively suppress vibration of the non-fastened portion, it is conceivable to form a through hole in the non-fastened portion, insert another bolt through the through hole, and fasten the elastic member by the bolt. However, if, after the design of the straddled vehicle is completed, it is found that there is a large vibration in the non-fastened portion, the design must be redone so that a through hole is formed in the non-fastened portion. In such a case, the strength analysis of the vehicle part must be redone, and the redesign takes time and effort.

Document JP5371629 discloses a known straddled vehicle comprising:a first vehicle part having a first hole formed therein; an arm member having a second hole formed therein; a bolt inserted through the first hole and the second hole to fasten together the first vehicle part and the arm member; comprising: a second vehicle part having a third hole formed herein, wherein the bolt is inserted through the first hole, the second hole and the third hole to fasten together the first vehicle part, the second vehicle part and the arm member, the straddled vehicle comprising: a vehicle main body;a rear arm pivotally supported by a pivot shaft on the vehicle main body;a rear wheel supported on the rear arm; and a tension bar provided to bridge between the rear arm and the rear wheel, wherein: the first vehicle part is the tension bar; and the second vehicle part is a bracket provided on the rear arm.

### Description of the invention

The present invention has been made in view of the above, and an object thereof is to provide a straddled vehicle that can effectively suppress vibration of a non-fastened portion of a vehicle part without a need for troublesome redesign.

A straddled vehicle disclosed herein includes: a first vehicle part having a first hole formed therein; an arm member having a second hole formed therein; a bolt inserted through the first hole and the second hole to fasten together the first vehicle part and the arm member; and an elastic member that is provided on the arm member and is in contact with the first vehicle part.

With the straddled vehicle described above, it is possible to effectively suppress vibration of the non-fastened portion by pressing the elastic member against a portion of the first vehicle part that is spaced apart from the first hole (hereinafter referred to also as the non-fastened portion). Since the elastic member is provided on the arm member fastened to the bolt, there is no need to form a through hole in the non-fastened portion of the first vehicle part. It is possible to effectively suppress vibration of the non-fastened portion only by bolting the arm member with the elastic member provided thereon by making use of a hole (the first hole) that is formed in the first vehicle part in the first place. Therefore, it is possible to effectively suppress vibration of the non-fastened portion of the first vehicle part without a need for troublesome redesign.

The arm member may be configured to be flexibly deformable; and the elastic member may be pressed against the first vehicle part by restoring force of flexural deformation of the arm member.

Thus, it is possible to effectively suppress vibration of the first vehicle part.

The straddled vehicle comprises a second vehicle part having a third hole formed herein. The bolt is inserted through the first hole, the second hole and the third hole to fasten together the first vehicle part, the second vehicle part and the arm member.

Thus, it is possible to effectively suppress vibration of the first vehicle part only by bolting the arm member with the elastic member provided thereon together with the first vehicle part and the second vehicle part. It is possible to attach the arm member by making use of holes for fastening together the first vehicle part and the second vehicle part (the first hole and the third hole). Thus, it is possible to effectively suppress vibration of the non-fastened portion of the first vehicle part without a need for troublesome redesign.

The arm member may include a fastened portion that is located around the bolt and is in contact with the first vehicle part or the second vehicle part, and an arm portion that extends from the fastened portion in a direction intersecting an axis of the bolt. The elastic member may be provided on the arm portion.

Thus, by adjusting the length of the arm portion, the portion of the first vehicle part against which the elastic member is pressed can be freely set. It is possible to effectively suppress vibration by pressing the elastic member against a portion of the first vehicle part where there is a large vibration.

A hole may be formed in the arm portion; and the elastic member may be fitted into the hole.

Thus, it is possible to easily arrange the elastic member.

The arm member may include an anti-rotation portion that engages with the first vehicle part or the second vehicle part to restrict rotation of the arm member around an axis of the bolt.

Thus, since the rotation of the arm member can be restricted, it is possible to prevent the position of the elastic member from shifting when the arm member is bolted.

One of the first vehicle part and the second vehicle part may include a first surface perpendicular to the axis of the bolt and a second surface intersecting the first surface. The anti-rotation portion includes a first hook portion that is hooked on the second surface, and a second hook portion that is spaced apart from the first hook portion in a direction perpendicular to the axis of the bolt and is hooked on the second surface.

Thus, it is possible to restrict the rotation of the arm member by a simple configuration.

The second vehicle part may include a first plate portion overlaid on the first vehicle part. The fastened portion of the arm member may be overlaid on the first plate portion. The first plate portion may include an edge portion intersecting the arm portion of the arm member as viewed along the axis of the bolt. The arm portion of the arm member may include a bent portion that overlaps the edge portion of the first plate portion as viewed along the axis of the bolt and is spaced away from the edge portion of the first plate portion in an axial direction of the bolt.

This prevents the arm member from being caught on the edge portion of the first plate since the arm member and the edge portion of the first plate are not in contact with each other.

The bolt may include a rod-shaped portion and a head portion having an outer diameter larger than an outer diameter of the rod-shaped portion. A nut may be screwed onto the rod-shaped portion of the bolt and may sandwich, together with the head portion of the bolt, the first vehicle part, the second vehicle part and the arm member. The arm member may be in contact with the head portion of the bolt or the nut.

Thus, since the arm member functions also as a washer, there is no need for a washer.

The straddled vehicle includes:
a vehicle main body; a rear arm pivotally supported by a pivot shaft on the vehicle main body; a rear wheel supported on the rear arm; and a tension bar provided to bridge between the rear arm and the rear wheel. The first vehicle part is the tension bar; and the second vehicle part is a bracket provided on the rear arm.

The first vehicle part may have a plane to be in contact with the elastic member. The arm member may extend in a direction oblique to the plane.

Thus, it is possible to suppress not only the vibration in the direction perpendicular to the plane of the first vehicle part but also the vibration in the direction parallel to the plane.

The elastic member may include a spherical portion that is convex toward the first vehicle part.

Thus, vibration of the first vehicle part can be effectively suppressed by the elastic member.

The arm member may be made from a flexibly deformable metal plate. The elastic member may be made of a rubber.

The elastic member may be made of a rubber having a hardness of 30 to 80 degrees.

According to the present invention, it is possible to effectively suppress vibration of a non-fastened portion of a vehicle part without a need for troublesome redesign.

### Brief description of the drawings

FIG. 1 is a right side view showing a schematic configuration of a motorcycle according to an embodiment of the present invention
FIG. 2 is a right side view showing a portion of the motorcycle.
FIG. 3 is a side view of section III of FIG. 2 as viewed from leftward.
FIG. 4 is a perspective view of section III of FIG. 2 as viewed from leftward and downward.
FIG. 5 is a cross-sectional view taken along line V-V of FIG. 3.

### Embodiments of the invention

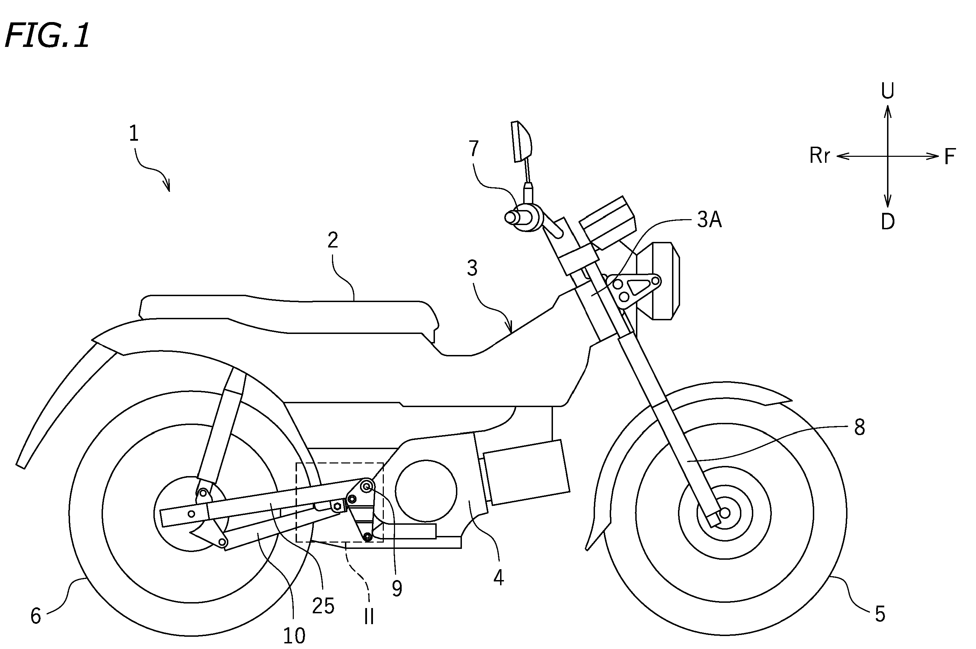

One embodiment of a straddled vehicle will now be described with reference to the drawings. FIG. 1 is a right side view showing a schematic configuration of a motorcycle 1, which is an example straddled vehicle.

The terms front, rear, left, right, up and down, as used in the description below, refer to these directions as seen from a virtual rider seated on a seat 2 while the motorcycle 1 is standing upright on a horizontal surface with no rider and no load thereon, unless specified otherwise. The designations F, Rr, L, R, U and D, as used in the figures, refer to front, rear, left, right, up and down, respectively.

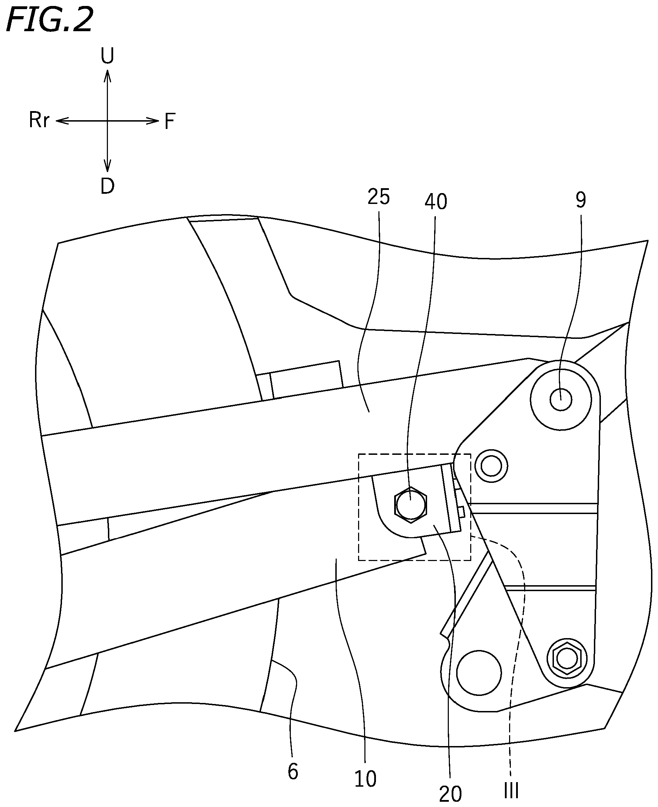

The motorcycle 1 includes a vehicle body 3 having a head pipe 3A, a seat 2 on which a passenger sits, an internal combustion engine (hereinafter referred to as "engine") 4, which is an example of a driving source for traveling, supported by the vehicle body 3, a front wheel 5, a rear wheel 6 and a steering handle 7. FIG. 2 is an enlarged view of section II of FIG. 1. The motorcycle 1 includes a tension bar 10 and a rear arm 25.

As shown in FIG. 1, a steering shaft (not shown) is rotatably supported on the head pipe 3A. The steering handle 7 is fixed to an upper portion of the steering shaft. A lower portion of the steering handle 7 is fixed to the front fork 8. The front wheel 5 is linked to the front fork 8.

The vehicle main body 3 and the front end portion of the rear arm 25 are linked together by the pivot shaft **9.** The rear arm **25** is pivotally linked to the vehicle body **3.** The rear wheel **6** is linked to the rear end portion of the rear arm **25.** The rear wheel **6** is linked to the engine **4** via a power transmission member (not shown) such as a chain so that power can be transmitted therebetween. The rear wheel **6** is the drive wheel and is rotated by the driving force of the engine **4.**

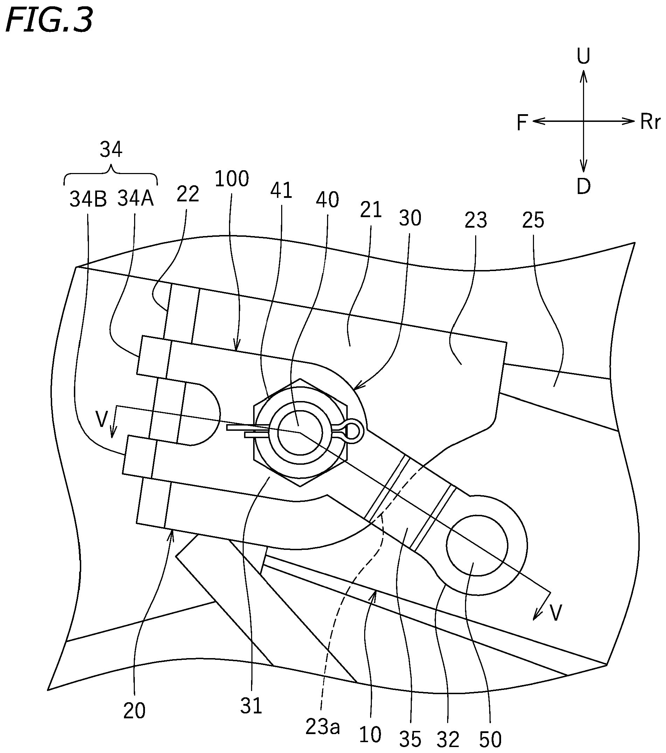

As shown in FIG. **2****,** a bracket **20** extending downward is fixed to the front end portion of the rear arm **25.** Here, the rear arm **25** and the bracket **20** are made of metal. The bracket **20** is welded to the rear arm **25.** The tension bar **10** and the bracket **20** are fixed together by a bolt **40** and a nut **45** (see FIG. **3****).**

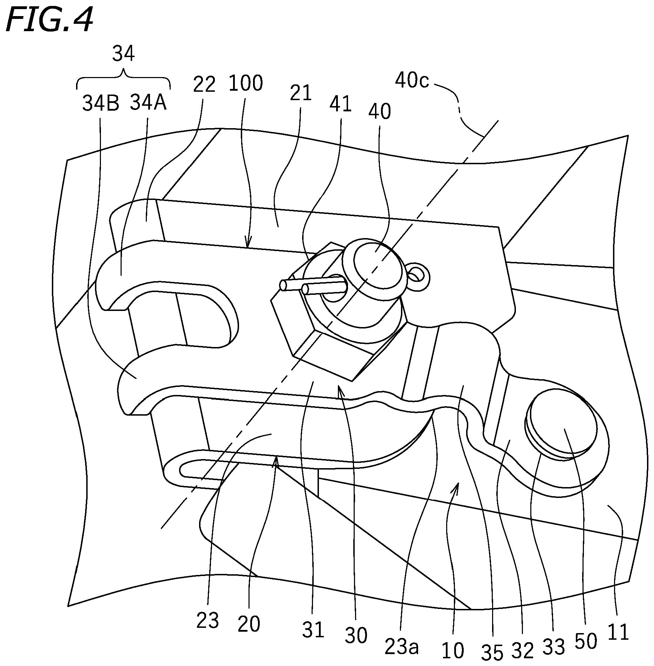

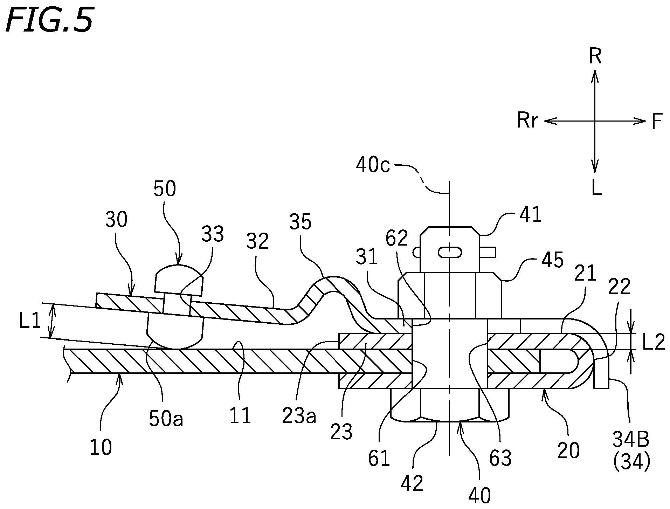

FIG. **3** is a side view of section III of FIG. **2** as viewed from leftward in the left-right direction of the vehicle, and FIG. **4** is a perspective view of section III as viewed from leftward and downward. FIG. **3** and FIG. **4** represent the reverse side of section III of FIG. **2****.** FIG. **5** is a cross-sectional view taken along line V-V of FIG. **3****.** The motorcycle **1** according to the present embodiment includes a vibration suppression member **100** that suppresses vibration of the tension bar **10.** The details of the vibration suppression member **100** will now be described with reference to FIG. **3** to FIG. **5****.**

The vibration suppression member **100** includes an arm member **30** and an elastic member **50** provided on the arm member **30.** While the arm member **30** and the elastic member **50** may be an integral part, they are separate parts in the present embodiment. The arm member **30** is made from a flexibly deformable metal plate and the elastic member **50** is made of rubber. The elastic member **50** is assembled to the arm member **30.** While there is no particular limitation on the hardness of the rubber of the elastic member **50,** the elastic member **50** is made of a rubber with a hardness of 30 to 80 degrees.

As shown in FIG. **5****,** the bracket **20** is formed with a U-shaped cross section. The tension bar **10** has a first hole **61.** A second hole **62** is formed in the arm member **30.** A third hole **63** is formed in the bracket **20.** The bolt **40** is inserted into the first hole **61,** the second hole **62** and the third hole **63.** The bolt **40** includes a rod-shaped portion **41** with a spiral groove (not shown) and a head portion **42** having an outer diameter larger than the outer diameter of the rod-shaped portion **41.** The rod-shaped portion **41** passes through the first hole **61,** the second hole **62** and the third hole **63.** The nut **45** is screwed onto rod-shaped portion **41.** The nut **45,** together with the head portion **42** of the bolt **40,** sandwiches the tension bar **10,** the bracket **20** and the arm member **30.** The bolt **40,** together with the nut **45,** fastens the tension bar **10,** the bracket **20** and the arm member **30.**

The arm member **30** includes a fastened portion **31** located around the bolt **40** and an arm portion **32** extending from the fastened portion **31** in a direction intersecting the axis **40c** of the bolt **40.** The fastened portion **31** is in contact with the bracket **20.** The elastic member **50** is provided in the arm portion **32.** A hole **33** is formed in the arm portion **32.** The elastic member **50** is fitted into the hole **33.** The elastic member **50** is removably fitted into the hole **33** by deformation.

The elastic member **50** includes a spherical portion **50a** that is convex toward the tension bar **10.** Here, the spherical portion **50a** is formed in a dome shape. The spherical portion **50a** is formed in a hemispherical shape. The distance **L1** between the left side surface of the arm member **30** (i.e., the bottom surface in FIG. **5****)** and the distal end of the elastic member **50** is larger than the distance **L2** between the left side surface of the arm member **30** and the right side surface **11** of the tension bar **10.** Therefore, the arm member **30** bends toward the right side as it goes toward the distal end. The arm member **30** extends backward and rightward. The arm member **30** extends in a direction oblique to the right side surface **11** of the tension bar **10.** The elastic member **50** is pressed against the tension bar **10** by the restoring force of the flexural deformation of the arm member **30.** The elastic member **50** is in contact with the tension bar **10.**

As shown in FIG. **4****,** the arm member **30** includes an anti-rotation portion **34** that restricts the rotation around the axis of the bolt **40** (hereinafter referred to as the bolt axis) **40c.** The anti-rotation portion **34** engages with the bracket **20.** The bracket **20** has a right side surface **21** perpendicular to the bolt axis **40c** and a front surface **22** intersecting the right side surface **21.** The right side surface **21** is an example of the "first surface" and the front face **22** is an example of the "second surface". The anti-rotation portion **34** includes a first hook portion **34A** and a second hook portion **34B** hooked on the front surface **22.** The first hook portion **34A** and the second hook portion **34B** have a hook shape. The second hook portion **34B** is spaced downward from the first hook portion **34A.** The second hook portion **34B** is spaced apart from the first hook portion **34A** in a direction perpendicular to the bolt axis **40c.**

The bracket **20** includes a first plate portion **23** overlaid on the tension bar **10.** As shown in FIG. **5****,** the fastened portion **31** of the arm member **30** is overlaid on the first plate portion **23.** The arm portion **32** includes a bent portion **35** that protrudes rightward. As shown in FIG. **3****,** the first plate portion **23** includes an edge portion **23a** that intersects the arm portion **32** of the arm member **30,** as viewed along the bolt axis **40c.** The bent portion **35** overlaps the edge portion **23a** of the first plate portion **23,** as viewed along the bolt axis **40c.** The bent portion **35** is spaced apart from the edge portion **23a** of the first plate portion **23** in the axial direction of the bolt **40** (see FIG. **5****).**

As described above, the bolt **40,** together with the nut **45,** fastens together the bracket **20,** the tension bar **10** and the arm member **30.** As shown in FIG. **5****,** the head portion **42** of the bolt **40** is in contact with the bracket **20.** The nut **45** is in contact with the fastened portion **31** of the arm member **30.** No washer is provided between the head portion **42** of the bolt **40** and the nut **45.** In the present embodiment, the fastened portion **31** of the arm member **30** serves as a washer for fastening together the bracket **20** and the tension bar **10** by means of the bolt **40** and the nut **45.**

The motorcycle **1** is configured as described above. With the motorcycle **1,** the vibration of the engine **4** may be transmitted to the tension bar **10** through the vehicle body **3** and the rear arm **25,** thereby causing the tension bar **10** to vibrate, for example. This may result in abnormal noise.

If the portion of the tension bar **10** around the first hole **61** (hereinafter referred to as the fastened portion) vibrates, it is possible to desirably suppress the vibration by providing a ring-shaped rubber sheet interposed between the tension bar **10** and the bracket **20,** and fastening the rubber sheet with the tension bar **10** and the bracket **20** by a bolt. However, if the portion of the tension bar **10** that is away from the first hole **61** (hereinafter referred to as the non-fastened portion) vibrates, the vibration may not be desirably suppressed even with such a rubber sheet. In order to effectively suppress vibration of the non-fastened portion, it is conceivable to form a through hole in the non-fastened portion and fasten a bolt through the through hole together with the ring-shaped rubber sheet. However, if, after the design of the motorcycle **1** is completed, it is found that there is a large vibration in the non-fastened portion, the design must be redone so that a through hole is formed in the non-fastened portion. In such a case, the strength analysis of the tension bar **10,** etc., needs to be redone, and the redesign takes time and effort.

According to the present embodiment, however, the arm member **30** is fixed to the tension bar **10** by the bolt **40** fastened to the tension bar **10.** The arm member **30** is then provided with the elastic member **50** in contact with the tension bar **10.** The elastic member **50** is pressed against a portion of the tension bar **10** that is away from the circumference of the first hole **61** (the non-fastened portion). Therefore, if there is a large vibration in the non-fastened portion of the tension bar **10,** it is possible to effectively suppress the vibration. Since the elastic member **50** is provided in the arm member **30** fastened to the bolt **40,** there is no need to afterwards form a through hole in the non-fastened portion of the tension bar **10.** The vibration of the tension bar **10** can be effectively suppressed simply by bolting the arm member **30** with the elastic member **50** using the first hole **61,** which is formed in the tension bar **10** in the first place. Thus, it is possible to desirably suppress the vibration of the non-fastened portion of the tension bar **10** without a need for troublesome redesign.

The arm member **30** is configured to be flexibly deformable, and the elastic member **50** is pressed against the tension bar **10** by the restoring force of the flexural deformation of the arm member **30.** Thus, it is possible to effectively suppress vibration of the tension bar **10.**

According to the present embodiment, it is possible to effectively suppress vibration of the tension bar **10** simply by bolting the arm member **30** with the elastic member **50** together with the tension bar **10** and the bracket **20.** The holes for fastening together the tension bar **10** and the bracket **20** (i.e., the first hole **61** and the third hole **63)** can be used to attach the arm member **30.** Thus, it is possible to effectively suppress vibration of the non-fastened portion of the tension bar **10** without a need for troublesome redesign.

The arm member **30** includes the fastened portion **31** and the arm portion **32,** and the elastic member **50** is provided in the arm portion **32.** By adjusting the length of the arm portion **32,** the portion of the tension bar **10** against which the elastic member **50** is pressed can be freely set. If the elastic member **50** is pressed against a portion of the tension bar **10** where vibration is large, it is possible to more effectively suppress vibration.

According to the present embodiment, the elastic member **50** is fitted into the hole **33** of the arm portion **32** of the arm member **30.** By fitting the elastic member **50** into the hole **33,** the elastic member **50** can be easily arranged.

According to the present embodiment, the arm member **30** includes the anti-rotation portion **34** that restricts the rotation of the arm member **30** by engaging with the bracket **20** (see FIG. **4****).** Since the rotation of the arm member **30** can be restricted, it is possible to prevent the position of the elastic member **50** from shifting when the arm member **30** is bolted.

While there is no particular limitation on the configuration of the anti-rotation portion **34,** the anti-rotation portion **34** according to the present embodiment includes the first hook portion **34A** and the second hook portion **34B** hooked on the front surface **22** of the bracket **20.** The rotation of the arm member **30** can be restricted by a simple configuration.

According to the present embodiment, the arm portion **32** of the arm member **30** includes the bent portion **35.** This prevents the arm member **30** from being caught on the edge portion **23a** of the bracket **20** since the arm member **30** and the edge portion **23a** of the bracket **20** are not in contact with each other.

According to the present embodiment, the arm member **30** is in contact with the nut **45** (see FIG. **5****).** Since the arm member **30** functions also as a washer, there is no need for a washer for fastening together the tension bar **10** and the bracket **20** by means of the bolt **40** and the nut **45.**

While the arm member **30** may be arranged parallel to the right side surface **11** of the tension bar **10,** the arm member **30** extends in a direction oblique to the right side surface **11** of the tension bar **10** in the present embodiment (see FIG. **5****).** The elastic member **50** is in oblique contact with the right side surface **11** of the tension bar **10.** Thus, it is possible to suppress not only the vibration in the direction perpendicular to the right side surface **11** of the tension bar **10** but also the vibration in the direction parallel to the right side surface **11.** That is, it is possible to suppress not only the vibration of the tension bar **10** in the left-right direction but also the vibration in the front-rear direction.

While there is no particular limitation on the shape of the elastic member **50,** the elastic member **50** includes a spherical portion **50a** that is convex toward the tension bar **10** in the present embodiment. Thus, it is possible to effectively suppress vibration of the tension bar **10.**

While one embodiment of the straddled vehicle has been described above, the embodiment described above is merely an example. Various other embodiments are possible. Examples of other embodiments will be briefly described below.

While the arm member **30** is arranged rightward of the tension bar **10** and the bracket **20** in the embodiment described above, the arm member **30** may be arranged leftward of the tension bar **10** and the bracket **20.** The elastic member **50** may be in contact with the left side surface of the tension bar **10.** The arm member **30** may be sandwiched between the tension bar **10** and the bracket **20.**

In the embodiment described above, the elastic member **50** is attached to the arm member **30** by being fitted into the hole **33** of the arm member **30.** Note however that there is no limitation on the method for attaching the elastic member **50** to the arm member **30.** For example, the elastic member **50** may be bonded to the arm member **30.**

While the anti-rotation portion **34** of the arm member **30** includes the first hook portion **34A** and the second hook portion **34B** hooked on the front surface **22** of the bracket **20** in the embodiment described above, the surface on which the first hook portion **34A** and the second hook portion **34B** are hooked is not limited to the front surface **22** of the bracket **20.** For example, one or both of the first hook portion **34A** and the second hook portion **34B** may be hooked on the lower surface of the bracket **20.** One or both of the first hook portion **34A** and the second hook portion **34B** may be hooked on the upper surface or the lower surface of the rear arm **25.**

The anti-rotation portion **34** of the arm member **30** may be optional.

The bent portion **35** of the arm member **30** may be optional. The arm portion **32** of the arm member **30** may extend straight.

There is no particular limitation on the material of the arm member **30** and the elastic member **50.**

While no washer is provided between the head portion **42** of the bolt **40** and the nut **45** in the embodiment described above, a washer may be provided.

A portion of the elastic member **50** that is in contact with the tension bar **10** does not need to be formed in a spherical shape.

In the embodiment described above, "the first vehicle part" is the tension bar **10,** and "the second vehicle part" is the bracket **20** provided on the rear arm **25.** However, there is no limitation as long as "the first vehicle part" and "the second vehicle part" are parts provided on the vehicle.

While the motorcycle **1** includes the engine **4** as a driving source for traveling in the embodiment described above, the driving source for traveling is not limited to the engine **4.** The driving source for traveling may be an electric motor.

A straddled vehicle refers to a vehicle that is straddled by a rider. The straddled vehicle is not limited to the motorcycle **1.**

### Reference Signs List

1: Motorcycle (straddled vehicle), 3: Vehicle main body, 3A: Head pipe, 6: Rear wheel, 9: Pivot shaft, 10: Tension bar (first vehicle part), 11: Right side surface (surface) of tension bar, 20: Bracket (second vehicle part), 21: Right side surface of bracket (first surface), 22: Front surface of bracket (second surface), 23: First plate portion, 23a: Edge portion, 25: Rear arm, 30: Arm member, 31: Fastened portion, 32: Arm portion, 33: Hole, 34: Anti-rotation portion, 34A: First hook portion, 32B: Second hook portion, 35: Bent portion, 40: Bolt, 40c: Axis of bolt, 41: Rod-shaped portion, 42: Head portion, 45: Nut, 50: Elastic member, 50a: Spherical portion, 61: First hole, 62: Second hole, 63: Third hole

## Claims

1. A straddled vehicle **(1)** comprising:
a first vehicle part **(10)** having a first hole **(61)** formed therein;
an arm member **(30)** having a second hole **(62)** formed therein;
a bolt **(40)** inserted through the first hole **(61)** and the second hole **(62)** to fasten together the first vehicle part **(10)** and the arm member **(30);** and
an elastic member **(50)** that is provided on the arm member **(30)** and is in contact with the first vehicle part **(10);**
further comprising:
a second vehicle part **(20)** having a third hole **(63)** formed herein,
wherein the bolt **(40)** is inserted through the first hole **(61),** the second hole **(62)** and the third hole **(63)** to fasten together the first vehicle part **(10),** the second vehicle part **(20)** and the arm member **(30);**
the straddled vehicle **(1)** comprising:
a vehicle main body **(3);**
a rear arm **(25)** pivotally supported by a pivot shaft **(9)** on the vehicle main body **(3);**
a rear wheel **(6)** supported on the rear arm **(25);** and
a tension bar provided to bridge between the rear arm **(25)** and the rear wheel **(6),**
the first vehicle part **(10)** is the tension bar; and
the second vehicle part **(20)** is a bracket provided on the rear arm **(25).**

2. The straddled vehicle **(1)** according to claim 1, wherein:
the arm member **(30)** is configured to be flexibly deformable; and
the elastic member **(50)** is pressed against the first vehicle part **(10)** by restoring force of flexural deformation of the arm member **(30).**

3. The straddled vehicle **(1)** according to claim 1 or 2, wherein:
the arm member **(30)** includes a fastened portion **(31)** that is located around the bolt **(40)** and is in contact with the first vehicle part **(10)** or the second vehicle part (20), and an arm portion **(32)** that extends from the fastened portion **(31)** in a direction intersecting an axis **(40c)** of the bolt **(40);** and
the elastic member **(50)** is provided on the arm portion **(32).**

4. The straddled vehicle **(1)** according to claim 3, wherein:
a hole **(33)** is formed in the arm portion **(32);** and
the elastic member **(50)** is fitted into the hole **(33).**

5. The straddled vehicle **(1)** according to claim 3 or 4, wherein the arm member **(30)** includes an anti-rotation portion **(34)** that engages with the first vehicle part **(10)** or the second vehicle part **(20)** to restrict rotation of the arm member **(30)** around an axis **(40c)** of the bolt **(40).**

6. The straddled vehicle **(1)** according to claim 5, wherein:
one of the first vehicle part **(10)** and the second vehicle part **(20)** includes a first surface (21) perpendicular to the axis **(40c)** of the bolt **(40)** and a second surface **(22)** intersecting the first surface **(21);** and
the anti-rotation portion **(34)** includes a first hook portion **(34A)** that is hooked on the second surface **(22),** and a second hook portion **(34B)** that is spaced apart from the first hook portion **(34A)** in a direction perpendicular to the axis **(40c)** of the bolt **(40)** and is hooked on the second surface **(22).**

7. The straddled vehicle **(1)** according to any one of claims 3 to 6, wherein:
the second vehicle part **(20)** includes a first plate portion **(23)** overlaid on the first vehicle part **(10);**
the fastened portion **(31)** of the arm member **(30)** is overlaid on the first plate portion **(23);**
the first plate portion **(23)** includes an edge portion **(23a)** intersecting the arm portion **(32)** of the arm member **(30)** as viewed along the axis **(40c)** of the bolt **(40);** and
the arm portion **(32)** of the arm member **(30)** includes a bent portion **(35)** that overlaps the edge portion **(23a)** of the first plate portion **(23)** as viewed along the axis **(40c)** of the bolt **(40)** and is spaced away from the edge portion **(23a)** of the first plate portion **(23)** in an axial direction of the bolt **(40).**

8. The straddled vehicle **(1)** according to any one of claims 1 to 7, wherein:
the bolt **(40)** includes a rod-shaped portion **(41)** and a head portion **(42)** having an outer diameter larger than an outer diameter of the rod-shaped portion **(41);**
a nut **(45)** is screwed onto the rod-shaped portion (41) of the bolt **(40)** and sandwiches, together with the head portion **(42)** of the bolt **(40),** the first vehicle part **(10),** the second vehicle part **(20)** and the arm member **(30);** and
the arm member **(30)** is in contact with the head portion **(42)** of the bolt **(40)** or the nut **(45).**

9. The straddled vehicle **(1)** according to any one of claims 1 to 8, wherein:
the first vehicle part **(10)** has a plane **(11)** to be in contact with the elastic member **(50);** and
the arm member **(30)** extends in a direction oblique to the plane **(11).**

10. The straddled vehicle **(1)** according to any one of claims 1 to 9, wherein the elastic member **(50)** includes a spherical portion **(50a)** that is convex toward the first vehicle part **(10).**

11. The straddled vehicle **(1)** according to any one of claims 1 to 10, wherein:
the arm member **(30)** is made from a flexibly deformable metal plate; and
the elastic member **(50)** is made of a rubber.

12. The straddled vehicle **(1)** according to any one of claims 1 to 11, wherein the elastic member **(50)** is made of a rubber having a hardness of 30 to 80 degrees.

## Patentansprüche

1. Grätschsitz-Fahrzeug (1), mit:
einem ersten Fahrzeugteil (10) mit einer darin ausgebildeten ersten Bohrung (61);
einem Armelement (30) mit einer darin ausgebildeten zweiten Bohrung (62);
einer Schraube (40), die durch die erste Bohrung (61) und die zweite Bohrung (62) eingeführt ist, um das erste Fahrzeugteil (10) und das Armelement (30) miteinander zu verbinden; und
einem elastischen Element (50), das an dem Armelement (30) vorgesehen ist und mit dem ersten Fahrzeugteil (10) in Kontakt steht;
ferner mit:
einem zweiten Fahrzeugteil (20) mit einer darin ausgebildeten dritten Bohrung (63),
wobei die Schraube (40) durch die erste Bohrung (61), die zweite Bohrung (62) und die dritte Bohrung (63) eingeführt ist, um das erste Fahrzeugteil (10), das zweite Fahrzeugteil (20) und das Armelement (30) miteinander zu verbinden;
wobei das Grätschsitz-Fahrzeug (1) aufweist:
einen Fahrzeughauptkörper (3);
einen hinteren Arm (25), der durch eine Schwenkachse (9) schwenkbar an dem Fahrzeughauptkörper (3) gehalten wird;
ein Hinterrad (6), das an dem hinteren Arm (25) gehalten wird; und
eine Zugstange, die als Verbindung zwischen dem hinteren Arm (25) und dem Hinterrad (6) vorgesehen ist;
wobei das erste Fahrzeugteil (10) die Zugstange ist; und
das zweite Fahrzeugteil (20) eine an dem hinteren Arm (25) vorgesehene Halterung ist.

2. Grätschsitz-Fahrzeug (1) gemäß Anspruch 1, wobei:
das Armelement (30) flexibel verformbar ausgebildet ist; und
das elastische Element (50) durch eine durch Biegeverformung hervorgerufene Rückstellkraft des Armelements (30) gegen das erste Fahrzeugteil (10) gedrückt wird.

3. Grätschsitz-Fahrzeug (1) gemäß Anspruch 1 oder 2, wobei:
das Armelement (30) einen befestigten Abschnitt (31) aufweist, der sich um die Schraube (40) herum befindet und mit dem ersten Fahrzeugteil (10) oder dem zweiten Fahrzeugteil (20) in Kontakt steht, und einen Armabschnitt (32) aufweist, der sich von dem befestigten Abschnitt (31) in einer Richtung erstreckt, die eine Achse (40c) der Schraube (40) schneidet; und
das elastische Element (50) an dem Armabschnitt (32) vorgesehen ist.

4. Grätschsitz-Fahrzeug (1) gemäß Anspruch 3, wobei:
eine Bohrung (33) in dem Armabschnitt (32) ausgebildet ist; und
das elastische Element (50) in die Bohrung (33) eingepasst ist.

5. Grätschsitz-Fahrzeug (1) gemäß Anspruch 3 oder **4,** wobei das Armelement (30) einen Verdrehsicherungsabschnitt (34) aufweist, der mit dem ersten Fahrzeugteil (10) oder dem zweiten Fahrzeugteil (20) in Eingriff steht, um die Drehung des Armteils (30) um eine Achse (40c) der Schraube (40) zu begrenzen.

6. Grätschsitz-Fahrzeug (1) gemäß Anspruch 5, wobei:
das erste Fahrzeugteil (10) oder das zweite Fahrzeugteil (20) eine erste Fläche (21) senkrecht zu der Achse (40c) der Schraube (40) und eine zweite Fläche (22) aufweist, die die erste Fläche (21) schneidet; und
der Verdrehsicherungsabschnitt (34) einen ersten Hakenabschnitt (34A), der an der zweiten Fläche (22) eingehängt ist, und einen zweiten Hakenabschnitt (34B) aufweist, der von dem ersten Hakenabschnitt (34A) in einer Richtung senkrecht zu der Achse (40c) der Schraube (40) beabstandet ist und an der zweiten Fläche (22) eingehängt ist.

7. Grätschsitz-Fahrzeug (1) gemäß einem der Ansprüche 3 bis 6, wobei:
das zweite Fahrzeugteil (20) einen ersten Plattenabschnitt (23) aufweist, der über dem ersten Fahrzeugteil (10) liegt;
der befestigte Abschnitt (31) des Armelements (30) auf dem ersten Plattenabschnitt (23) aufliegt;
der erste Plattenabschnitt (23) einen Randabschnitt (23a) aufweist, der bei Betrachtung entlang der Achse (40c) der Schraube (40) den Armabschnitt (32) des Armelements (30) schneidet; und
der Armabschnitt (32) des Armelements (30) einen gebogenen Abschnitt (35) aufweist, der bei Betrachtung entlang der Achse (40c) der Schraube (40) den Randabschnitt (23a) des ersten Plattenabschnitts (23) überlappt und in axialer Richtung der Schraube (40) von dem Randabschnitt (23a) des ersten Plattenabschnitts (23) beabstandet ist.

8. Grätschsitz-Fahrzeug (1) gemäß einem der Ansprüche 1 bis 7, wobei:
die Schraube (40) einen stabförmigen Abschnitt (41) und einen Kopfabschnitt (42) mit einem Außendurchmesser aufweist, der größer ist als der Außendurchmesser des stabförmigen Abschnitts (41);
eine Mutter (45) auf den stabförmigen Abschnitt (41) der Schraube (40) geschraubt ist und zusammen mit dem Kopfabschnitt (42) der Schraube (40) das erste Fahrzeugteil (10), das zweite Fahrzeugteil (20) und das Armelement (30) sandwichartig umschließt; und
das Armelement (30) mit dem Kopfabschnitt (42) der Schraube (40) oder der Mutter (45) in Kontakt steht.

9. Grätschsitz-Fahrzeug (1) gemäß einem der Ansprüche 1 bis 8, wobei:
das erste Fahrzeugteil (10) eine Ebene (11) aufweist, die mit dem elastischen Element (50) in Kontakt steht; und
sich das Armelement (30) in einer zu der Ebene (11) schrägen Richtung erstreckt.

10. Grätschsitz-Fahrzeug (1) gemäß einem der Ansprüche 1 bis 9, wobei das elastische Element (50) einen kugelförmigen Abschnitt (50a) aufweist, der zu dem ersten Fahrzeugteil (10) hin konvex ist.

11. Grätschsitz-Fahrzeug (1) gemäß einem der Ansprüche 1 bis 10, wobei:
das Armelement (30) aus einer flexibel verformbaren Metallplatte hergestellt ist; und
das elastische Element (50) aus Gummi hergestellt ist.

12. Grätschsitz-Fahrzeug (1) gemäß einem der Ansprüche 1 bis 11, wobei das elastische Element (50) aus einem Gummi mit einer Härte von 30 bis 80 Grad hergestellt ist.

## Revendications

1. Véhicule à enfourcher (1) comprenant :
une première partie de véhicule (10) ayant un premier trou (61) formé à l'intérieur ;
un élément de bras (30) ayant un deuxième trou (62) formé à l'intérieur ;
un boulon (40) inséré à travers le premier trou (61) et le deuxième trou (62) pour fixer ensemble la première partie de véhicule (10) et l'élément de bras (30) ; et
un élément élastique (50) qui est disposé sur l'élément de bras (30) et qui est en contact avec la première partie de véhicule (10) ;
comprenant en outre :
une seconde partie de véhicule (20) ayant un troisième trou (63) formé à l'intérieur,
dans lequel le boulon (40) est inséré à travers le premier trou (61), le deuxième trou (62) et le troisième trou (63) pour fixer ensemble la première partie de véhicule (10), la seconde partie de véhicule (20) et l'élément de bras (30) ;
le véhicule à enfourcher (1) comprenant :
un corps principal de véhicule (3) ;
un bras arrière (25) supporté de manière pivotante par un arbre de pivot (9) sur le corps principal de véhicule (3) ;
une roue arrière (6) supportée sur le bras arrière (25) ; et
une barre de tension prévue pour faire le pont entre le bras arrière (25) et la roue arrière (6),
la première partie de véhicule (10) est la barre de tension, et
la seconde partie de véhicule (20) est un étrier disposé sur le bras arrière (25).

2. Véhicule à enfourcher (1) selon la revendication 1, dans lequel :
l'élément de bras (30) est configuré pour être déformable en flexion ; et
l'élément élastique (50) est pressé contre la première partie de véhicule (10) en rétablissant une force de déformation en flexion de l'élément de bras (30).

3. Véhicule à enfourcher (1) selon la revendication 1 ou 2, dans lequel :
l'élément de bras (30) comporte une partie fixée (31) qui est située autour du boulon (40) et qui est en contact avec la première partie de véhicule (10) ou la seconde partie de véhicule (20), et une partie de bras (32) qui s'étend depuis la partie fixée (31) dans une direction entrecoupant un axe (40c) du boulon (40) ; et
l'élément élastique (50) est disposé sur la partie de bras (32).

4. Véhicule à enfourcher (1) selon la revendication 3, dans lequel :
un trou (33) est formé dans la partie de bras (32) ; et
l'élément élastique (50) est monté dans le trou (33).

5. Véhicule à enfourcher (1) selon la revendication 3 ou 4, dans lequel l'élément de bras (30) comporte une partie anti-rotation (34) qui vient en prise avec la première partie de véhicule (10) ou la seconde partie de véhicule (20) pour restreindre une rotation de l'élément de bras (30) autour d'un axe (40c) du boulon (40).

6. Véhicule à enfourcher (1) selon la revendication 5, dans lequel :
l'une de la première partie de véhicule (10) et de la seconde partie de véhicule (20) comporte une première surface (21) perpendiculaire à l'axe (40c) du boulon (40) et une seconde surface (22) entrecoupant la première surface (21) ; et
la partie anti-rotation (34) comporte une première partie de crochet (34A) qui est accrochée sur la seconde surface (22), et une seconde partie de crochet (34B) qui est espacée de la première partie de crochet (34A) dans une direction perpendiculaire à l'axe (40c) du boulon (40) et est accrochée sur la seconde surface (22).

7. Véhicule à enfourcher (1) selon l'une quelconque des revendications 3 à 6, dans lequel :
la seconde partie de véhicule (20) comporte une première partie de plaque (23) superposée sur la première partie de véhicule (10) ;
la partie fixée (31) de l'élément de bras (30) est superposée sur la première partie de plaque (23) ;
la première partie de plaque (23) comporte une partie de bord (23a) entrecoupant la partie de bras (32) de l'élément de bras (30) comme observé le long de l'axe (40c) du boulon (40) ; et
la partie de bras (32) de l'élément de bras (30) comporte une partie pliée (35) qui chevauche la partie de bord (23a) de la première partie de plaque (23) comme observé le long de l'axe (40c) du boulon (40) et est espacée de la partie de bord (23a) de la première partie de plaque (23) dans une direction axiale du boulon (40).

8. Véhicule à enfourcher (1) selon l'une quelconque des revendications 1 à 7, dans lequel :
le boulon (40) comporte une partie en forme de tige (41) et une partie de tête (42) ayant un diamètre extérieur supérieur à un diamètre extérieur de la partie en forme de tige (41) ;
un écrou (45) est vissé sur la partie en forme de tige (41) du boulon (40) et enserre, conjointement avec la partie de tête (42) du boulon (40), la première partie de véhicule (10), la seconde partie de véhicule (20) et l'élément du bras (30) ; et
l'élément de bras (30) est en contact avec la partie de tête (42) du boulon (40) ou l'écrou (45).

9. Véhicule à enfourcher (1) selon l'une quelconque des revendications 1 à 8, dans lequel :
la première partie de véhicule (10) a un plan (11) pour venir en contact avec l'élément élastique (50) ; et
l'élément de bras (30) s'étend dans une direction oblique par rapport au plan (11).

10. Véhicule à enfourcher (1) selon l'une quelconque des revendications 1 à 9, dans lequel l'élément élastique (50) comporte une partie sphérique (50a) qui est convexe vers la première partie de véhicule (10).

11. Véhicule à enfourcher (1) selon l'une quelconque des revendications 1 à 10, dans lequel :
l'élément de bras (30) est constitué d'une plaque métallique déformable en flexion ; et
l'élément élastique (50) est constitué d'un caoutchouc.

12. Véhicule à enfourcher (1) selon l'une quelconque des revendications 1 à 11, dans lequel l'élément élastique (50) est constitué d'un caoutchouc ayant une dureté de 30 à 80 degrés.
